# EUROPÄISCHE PATENTSCHRIFT

(11) **EP 0 820 734 B1**
(45) Veröffentlichungstag und Bekanntmachung des Hinweises auf die Patenterteilung: **13.10.2004**
(21) Anmeldenummer: 97112559.6
(22) Anmeldetag: 22.07.1997
(51) Int. Cl.: A61C 1/14

(54) **Winkelförmiges oder gerades Handstück mit einer lösbaren Spannvorrichtung für ein rotierendes Werkzeug, insbesondere für medizinische oder dentale Zwecke**
Angle or straight hand-piece with a releasable chuck device for a rotary tool, in particular for medical or dental purposes
Pièce à main angulaire ou droite avec dispositif de serrage détachable pour un outil rotatif, en particulier pour des fins médicales ou dentaires

(30) Priorität: 24.07.1996 DE 19629902
(43) Veröffentlichungstag der Anmeldung: 28.01.1998
(73) Patentinhaber: Kaltenbach & Voigt GmbH & Co. KG, 88400 Biberach/Riss (DE)
(72) Erfinder: Gugel, Bernd, 89079 Ulm-Einsingen (DE); Kuhn, Bernhard, 88433 Schemmerhofen (DE)
(74) Vertreter: Schmidt-Evers, Jürgen, Dipl.-Ing.

(56) Entgegenhaltungen:
- EP-A- 0 245 692
- DE-A- 3 442 386
- US-A- 4 966 552
- US-A- 5 022 857
- US-A- 5 312 252

## Beschreibung

Die Erfindung bezieht sich auf ein Handstück nach dem Oberbegriff des Anspruches 1.

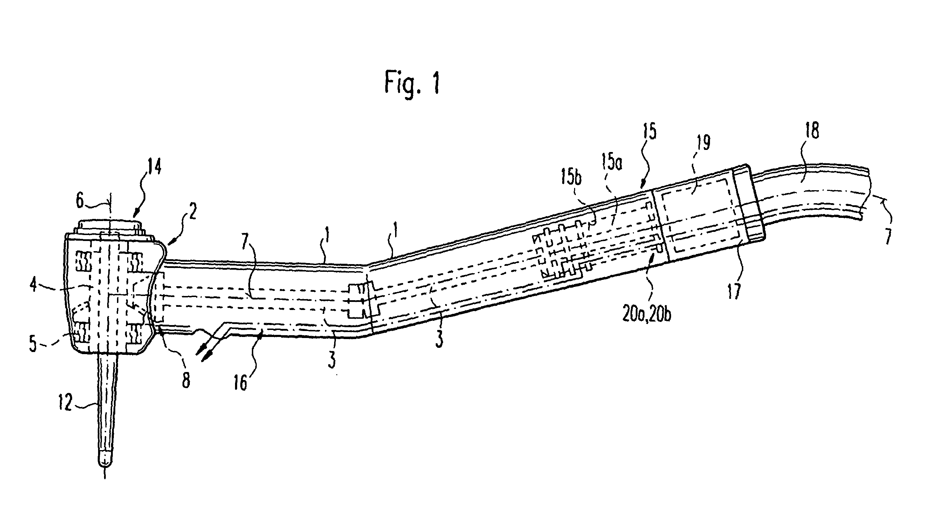

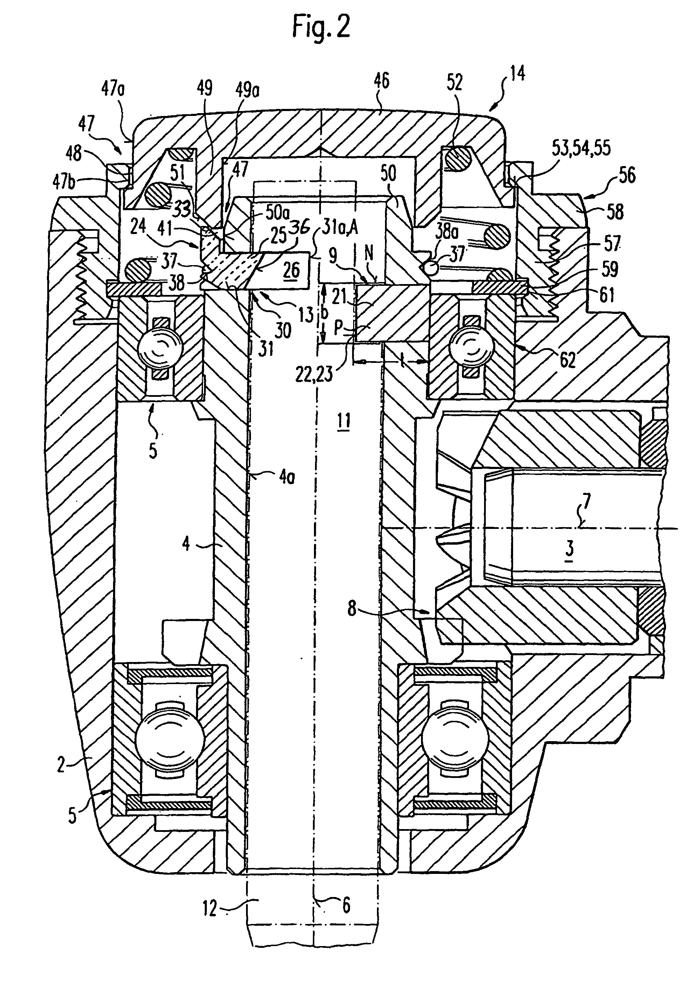

Ein Handstück dieser Art ist in der DE 34 42 386 A1 beschrieben. Bei dieser bekannten Ausgestaltung weist die lösbare Kupplung zur axialen Verbindung des Werkzeugschaftes mit der Antriebshülse einen auf einer Seite des Schaftes angeordneten Schieber (Fig. 1) oder zwei auf beiden Seiten des Schaftes angeordnete Schieber (Fig. 2) auf. Bei der Ausgestaltung nach Fig. 1 ist der Schieber in einer radialen Führungsnut der Antriebshülse radial zwischen einer radial einwärts gelegenen Kupplungsstellung und einer radial auswärts gelegenen Freigabestellung verschiebbar und durch eine Federkraft in die Kupplungsstellung elastisch beaufschlagt. Zur Verschiebung des Kupplungsschiebers in seine Freigabestellung ist auf der dem Werkzeug abgewandten Seite des Handstücks ein Druckglied axial verschiebbar, das bei seiner einwärts gerichteten Verschiebung mit einer kegelförmigen Schrägfläche gegen eine korrespondierende Schrägfläche am Kupplungsschieber trifft und diesen dabei in seine Freigabestellung verdrängt. Bei dem Kupplungsschieber handelt es sich um ein Bauteil, das im Funktionsbetrieb mit der Antriebshülse rotiert, während das Druckglied an dieser Rotation normalerweise nicht teilnimmt.

Bei dieser Kupplung zur axialen Verbindung des Werkzeugschaftes mit der Antriebshülse kann es im Funktionsbetrieb zu erheblichen Reibungs-Beanspruchungen zwischen Kupplungsschieber und Druckglied kommen, z.B. dann, wenn während der Rotation der Antriebshülse das Druckglied gegen den oder die Kupplungsschieber gedrückt wird und deshalb eine stillstehende Fläche am Druckglied auf eine drehende Fläche am Kupplungsschieber trifft. Dadurch entsteht Reibung und Verschleiß an den Kupplungsflächen, und in der Folge davon kommt es zum "Fressen" an den Kupplungsflächen, was zu einer Beschädigung der Kupplung und zum Ausfall des Handstücks führt.

Ein Kopfgehäuse eines zahnärztlichen Handstückes mit einer ähnlichen lösbaren Kupplung zur axialen Verbindung des Schaftes mit der Antriebshülse ist im DE-GM 89 13 626 beschrieben.

In der EP 0 245 692 A2 ist ein zahnärztliches Handstück mit einer Betätigungsvorrichtung zum Lösen eines Werkzeugs beschrieben, wobei zwischen einem Druckglied und einer Aufnahmehülse für einen Schaft des Werkzeugs eine Scheibe aus Keramik angeordnet ist.

In der US 5 022 857 A ist ein zahnärztliches Turbinenhandstück- mit einer einen Werkzeugschaft klemmenden Aufnahmehülse beschrieben, wobei auf der dem Werkzeug abgewandten Seite ein Gleitlager zur Lagerung des Turbinenrotors vorgesehen ist, das einen Gleitring aus Keramik aufweist.

Es ist üblich, den oder die Kupplungsschieber aus Metall, wie Stahl herzustellen

Es ist auch noch hervorzuheben, daß insbesondere bei einem vorliegenden Handstück für dentale Zwecke das Werkzeug mit hohen Drehzahlen antreibbar ist. Verschiedene spanabhebende Bearbeitungen sind Drehzahlen von 40.000 U/min und noch weit höhere Drehzahlen üblich.

Ein anderes Problem bei einem vorliegenden Handstück besteht darin, daß bei der Rotation am Kupplungsschieber eine beträchtliche Fliehkraft wirkt, die ihn in die Entkupplungsstellung zu ziehen sucht. Deshalb bedarf es auch einer beträchtlichen Federkraft zur elastischen Vorspannung des Kupplungsschiebers in die Kupplungsstellung. Dies ist problematisch, weil dadurch ein selbsttätiges Verdrängen des Kupplungsschiebers in seine Freigabestellung beim Einschieben des Werkzeugschaftes in die Antriebshülse erschwert ist.

Der Erfindung liegt die Aufgabe zugrunde, ein Haadstück der eingangs angegebenen Art so auszugestalten, daβ bei Gewährleistung eines geringen Verschleißes ein leichteres Öffnen der Kupplung möglich ist.

Ferner soll ein leichteres selbsttätiges Öffnen der Kupplung beim Einschieben des Werkzeugschaftes in die Antriebshülse möglich sein.

Diese Aufgabe wird durch die Merkmale des Anspruches 1 gelöst.

Bei der erfindungsgemäßen Ausgestaltung besteht der Kupplungsschieber aus einem keramischen Material. Hierdurch ist der Kupplungsschieber nicht nur leichter, sondern auch verschleißfester. Aufgrund seines geringen Massenträgheitsmoments bedarf es einer geringeren Federkraft zu seiner elastischen Beaufschlagung in die Kupplungsstellung. Infolge dessen kann diese Federkraft geringer bemessen werden als es bei den bekannten Ausgestaltungen der Fall ist. Daraus folgt, daß beim Einschieben des Werkzeugschaftes in die Antriebshülse der Kupplungsschieber mit einer geringeren Schubkraft in seine Freigabestellung verdrängt werden kann. Bei der erfindungsgemäßen Ausgestaltung ist somit das Werkzeug leichter und handhabungsfreundlicher mit der Antriebshülse zu kuppeln. Dabei wird auch das Werkzeug mit geringeren Kräften beaufschlagt, was insbesondere bei kleinen bzw. dünnen Werkzeugen von Vorteil ist, da die Gefahr, das Werkzeug beim Kuppeln zu überbelasten bzw. zu verbiegen, wesentlich reduziert ist.

Außerdem führt das geringere spezifische Gewicht des erfindungsgemäßen Kupplungsschiebers zu einem geringerem Massenträgheitsmoment und zu geringeren Vibrationen im Funktionsbetrieb. Hieraus folgt auch ein geringeres Laufgeräusch im Funktionsbetrieb.

Aufgrund der geringeren Reibungskräfte werden beim Betätigen der Betätigungsvorrichtung auch die Umfangskräfte und somit die Gefahr, daß der Kupplungsschieber aus seiner Kupplungsstellung herausgezogen wird, deutlich reduziert.

Ein weiterer Vorteil besteht darin, daß aufgrund des geringeren Verschleißes weniger Verschleißrückstände (Abrieb) im Gehäuse entstehen, was ebenfalls erwünscht ist.

Es hat sich bei Versuchen gezeigt, daß die durch die Erfindung erzielbaren Vorteile auch dann erreicht werden, wenn das oder die mit dem Kupplungsschieber zusammenwirkende Bauteile aus Metall, insbesondere Stahl, oder ebenfalls aus keramischem Material bestehen. Es zeigt sich somit, daß die Werkstoffpaarung Keramik/Metall, insbesondere Stahl, oder Keramik/Keramik vorteilhaft ist.

Die vorbeschriebenen Vorteile werden verstärkt, wenn das mit dem Kupplungsschieber korrespondierende Druckglied auch aus keramischem Material besteht.

Das Druckglied ist vorzugsweise koaxial und gegen eine Feder in das Gehäuse des Handstücks einschiebbar, wobei es beim Einschieben den Kupplungsschieber in seine Entkupplungsstellung verdrängt. Dabei kann das Druckglied mittels einer schrägen oder kegelabschnittförmigen Betätigungsfläche gegen eine entsprechend schräge oder kegelabschnittförmige Betätigungsfläche am Kupplungsschieber stoßen. Die schräge oder kegelabschnittförmige Betätigungsfläche kann an einem vom Kupplungsschieber zum Druckglied abstehenden Steg angeordnet sein.

Die Rückholfeder für den Kupplungsschieber kann diesen ringförmig oder C-förmig umgeben, vorzugsweise gemeinsam mit einem dem Kupplungsschieber gegenüberliegenden Abschnitt der Antriebshülse, wobei die Feder den Kupplungsschieber und die Antriebshülse ringförmig umgeben kann. Dabei ist es vorteilhaft, wenn der Kupplungsschieber in seiner vorzugsweise zylinderabschnittförmigen Mantelfläche eine Umfangsnut zur Aufnahme der Feder aufweist, wobei vorzugsweise die Umfangsnut sich in der Mantelfläche der Antriebshülse als Umfangsnut fortsetzen kann. Am Kupplungsschieber können zwei Umfangsnutabschnitte vorgesehen sein, die an ihren einander zugewandten Enden einen Abstand voneinander aufweisen, wobei die Feder eine C-förmige Form, vorzugsweise im Sinne einer Spange, aufweist und der Abstand der Federenden in etwa an den Abstand der Nutabschnitte angepaßt ist.

Das Kupplungsteil läßt sich in einfacher und kostengünstiger Weise in einem Formwerkzeug herstellen, wobei das fließfähige Ausgangsmaterial des Kupplungsschiebers mittels einer Zuführungsleitung in das Formwerkzeug gefördert wird, wobei sich an der Mündung der Zuführungsleitung ein sogenannter Anspritzbereich ausbildet, der formungenau sein kann, z.B. aufgrund eines Verschlusses des Formhohlraums nach dem Einführen des Materials oder aufgrund eines Abbrechens des erhärteten Überschußmaterials im Anspritzbereich. Es ist vorteilhaft, wenn der Kupplungsschieber einen vorzugsweise länglichen Anspritzbereich aufweist, der an einem insbesondere nach innen versetzten Bereich der Mantelfläche angeordnet ist, vorzugsweise neben der Umfangsnut, insbesondere im Bereich eines axial vorspringenden Steges.

Es ist vorteilhaft, wenn das Druckglied eine pilzkopfförmige Form aufweist mit einem sich in das Gehäuse des Handstücks erstreckenden Betätigungsansatz.

Es ist im weiteren vorteilhaft, wenn das Druckglied an seiner sichtbaren Oberfläche eine Markierung aufweist, die eine besondere Funktion des Handstücks kennzeichnet. Die Markierung ist vorzugsweise farbig bzw. durch eine Farbe gebildet, wobei sie insbesondere die Farbe rot, blau, grün und/oder gelb aufweist. Die Farbe der Markierung kann nur auf einem Teilbereich, z.B. einer Kennzeichnungsstelle, der sichtbaren Oberfläche des Druckglieds oder auf der gesamten Oberfläche angeordnet sein. Es ist im weiteren vorteilhaft, die Markierung durch eine Einfärbung des keramischen Materials an der Oberfläche zu bilden oder das keramische Material insgesamt mit der zugehörigen Farbe einzufärben.

In den Unteransprüchen sind Merkmale enthalten, die eine Nachbehandlung des Kupplungsschiebers erübrigen. Die Kupplung des Werkzeugs sowohl hinsichtlich seiner Drehmitnahme als auch seiner axialen Kupplung verbessern, Reibungsmängel weiter vermindern, die Lebensdauer verlängern, von einfacher und kostengünstig herstellbarer Ausgestaltung sind und eine Kennzeichnung der Handstückart ermöglichen.

Nachfolgend werden die Erfindung und weiter erzielbare Vorteile anhand von bevorzugten Ausführungsbeispielen und Zeichnungen näher erläutert. Es zeigt:
- Fig. 1: ein erfindungsgemäßes Handstück in der Seitenansicht;
- Fig. 2: den Kopf des Handstücks im vertikalen Schnitt;
- Fig. 3: einen Kupplungsschieber des Handstücks im vertikalen Schnitt;
- Fig. 4: den Kupplungsschieber in der Seitenansicht von links;
- Fig. 5: den Kupplungsschieber in der Draufsicht;
- Fig. 6: den Kupplungsschieber in der Unteransicht;
- Fig. 7: den Kopf eines Handstücks in abgewandelter Ausgestaltung im vertikalen Schnitt.

Die Hauptteile eines vorliegenden Handstücks sind eine Griffhülse 1 mit einem Kopfgehäuse 2 an ihrem vorderen Ende, ein Antriebswellenabschnitt 3, der in der Griffhülse 1 drehbar gelagert ist, eine Antriebshülse 4, die mittels Drehlagern 5 um eine Drehachse 6 drehbar im Kopfgehäuse 2 gelagert ist, wobei die Drehachse 6 sich vorzugsweise rechtwinklig zur Längsmittelachse 7 der Griffhülse 1 erstreckt, eine Antriebsverbindung zwischen dem Antriebswellenabschnitt 3 und der Antriebshülse 4, hier in Form eines Winkelgetriebes 8 mit entsprechenden Ritzeln, eine erste Kupplung 9, zur lösbaren Drehmitnahmeverbindung eines von außen in die Antriebshülse 4 einsteckbaren Schaftes 11 eines Rotationswerkzeugs 12, eine zweite Kupplung 13 zur lösbaren axialen Verbindung des Schaftes 11 mit der Antriebshülse 4 und eine Betätigungsvorrichtung 14 zum Lösen der zweiten Kupplung 13 zwecks Entfernung des Werkzeugs 12 aus dem Handstück.

Die Griffhülse 1 kann durch eine Steckverbindung 15 mit einem Kupplungszapfen 15a und einer ihn aufnehmenden Kupplungsausnehmung 15b mit einem Anschlußstück 17 einer flexiblen Versorgungsleitung 18 verbindbar sein, deren anderes Ende mit einer nicht dargestellten Versorgungseinrichtung zum Versorgen des Handstücks mit erforderlichen Medien, wie z.B. elektrische Antriebsenergie, Blasluft, Wasser und/oder Spray, verbunden ist. Hierzu dienen sog. Medienleitungen 16, die sich längs durch die Versorgungsleitung 18 und die Steckverbindung 15 erstrecken können, wie es an sich bekannt ist. Die Medienleitungen für Wasser und/oder Luft sowie Licht enden im oder in der Nähe des Kopfgehäuses 2, wobei ihre Austrittsöffnungen auf die sich an der Spitze des Werkzeugs 12 befindlichen Behandlungsstelle gerichtet sind.

Beim vorliegenden Handstück kann es sich auch um eine sog. Turbine handeln, bei der eine druckluftführende Antriebsleitung sich im vorbeschriebenen Sinne bis zu einer im Kopfgehäuse 2 angeordneten Antriebsturbine erstreckt. Bei einer solchen Ausgestaltung entfällt der Antriebswellenabschnitt 3, der im Bereich der Steckverbindung 15 mittels eines mit einem elektrischen Antriebsmotor 19 oder damit verbundenen Antriebselementes verbindbar ist. Der Antriebsmotor 19 ist in an sich bekannter Weise im Anschlußstück 17 angeordnet.

Es ist im weiteren vorteilhaft, die Steckverbindung 15 als Steck/Dreh-Verbindung auszugestalten, so daß das Handstück relativ zum Anschlußstück 17 um die Längsmittelachse 7 drehbar ist, wobei der Durchgang der Medienleitungen durch die Steck/Dreh-Verbindung so erfolgt, daß in jeder Drehstellung der Durchgang der Medien gewährleistet ist. Für die Medien Luft und/oder Wasser sind die zylindrische Teilungsfuge zwischen dem Kupplungszapfen 15a und der Kupplungsausnehmung 15b etwa radial durch setzende Kanäle gebildet, die im Bereich der Teilungsfuge mit jeweils einer Ringnut in Verbindung stehen und durch axial beabstandete Dichtungsringe abgedichtet sind. Eine ein unbeabsichtigtes Lösen der Steckverbindung 15 verhindernde Vorrichtung ist durch ein Federelement 20a und eine ihn aufnehmende Ausnehmung 20b im Bereich der Teilungsfuge gebildet, wie es an sich bekannt ist.

Die erste Kupplung 9 ist durch einen inneren Vorsprung 21 in der Antriebshülse 4 mit einer sekantialen Kupplungsfläche 22 gebildet, die an der ebenfalls sekantialen Kupplungsfläche 23 des Schaftes 11 mit geringem Bewegungsspiel anliegt, wobei die Kupplungsfläche 23 durch eine endseitig auslaufende Ausnehmung oder Abflachung des Schaftes 11 gebildet ist.

Der innere Vorsprung 21 ist durch ein kreisabschnittförmiges Kupplungsteil gebildet, das als Paßstück P in eine sekantiale Nut N eingesetzt ist, die eine entsprechende Breite b und Tiefe t aufweist. Wie aus Fig. 2 deutlich zu erkennen ist, mündet die Nut N an der Mantelfläche der Antriebshülse aus, wobei sie in einer solchen Höhe angeordnet ist, daß sie wenigstens teilweise vom Innenring des als Wälzlager ausgebildeten zugehörigen Drehlagers 5 abgedeckt ist. Dadurch ist das Paßstück P formschlüssig in der Nut N gehalten.

Die zweite Kupplung 13 zur axial wirksamen Verbindung des Schaftes 11 mit der Antriebshülse 4 ist durch einen Kupplungsschieber 24, der in einem radialen Führungsschlitz der Antriebshülse 4 mit geringem Bewegungsspiel radial verschiebbar gelagert ist, sowie an seinem radial inneren Ende eine Kupplungsnase 25 aufweist, und eine letztere aufnehmende Kupplungsausnehmung 26 im Schaft 11 gebildet.

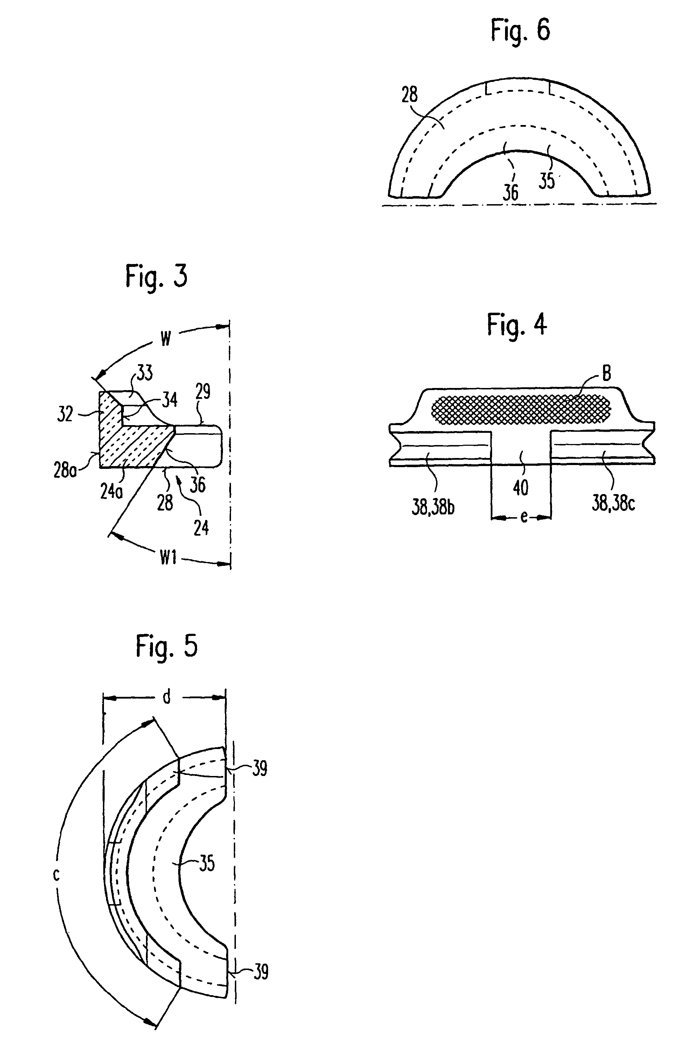

Der in den Fig. 3 bis 5 als Einzelteil dargestellte Kupplungsschieber 24 ist in der Draufsicht gesehen halbringförmig bzw. mondsichelförmig ausgebildet, wobei seine Außenmantelfläche zylinderabschnittförmig gekrümmt ist. Der Kupplungsschieber 24 besteht aus zwei einstückig miteinander verbundenen Abschnitten, nämlich einem halbringförmigen Schieberabschnitt 24a mit zueinander parallelen Unter- und Oberflächen 28,29, mit denen er mit geringem Bewegungsspiel in einem radialen Führungsschlitz 31 in der Antriebshülse 4 sitzt und darin radial verschiebbar ist. Die so gebildete radiale Führung ist mit 30 bezeichnet. Von der Oberfläche 29 des Schieberabschnitts 24a erstreckt sich am äußeren Rand ein zylinderabschnittförmig gekrümmter Steg 32 nach oben, der sich über den gesamten Umfangsabschnitts des Kupplungsschiebers 24 oder nur über einen Teil c des Umfangs erstreckt, und an seinem oberen Innenrand eine kegelabschnittförmige Konusfläche 33 aufweist, die mit der Vertikalen einen nach oben divergenten Winkel W von etwa 45° einschließt. Vorzugsweise ist unterhalb des inneren Randes der Konusfläche 33 noch eine zylinderabschnittförmige Stufenfläche 34 angeordnet, die sich bis zur Oberfläche 29 des Schieberabschnitts 24a erstreckt.

Die Kupplungsnase 25 ist an der radialen Innenseite des Schiebeabschnitts 24a ausgebildet, wobei sie durch einen in Umfangsrichtung verlaufenden kreisbogenabschnittsförmigen oder in etwas größerer Krümmung ausgebildeten Nasenbogen 35 gebildet ist, der unterseitig eine Anlaufschräge in Form einer kegelabschnittförmigen Kegelfläche 36 aufweist. Zu ihrer Stabilisierung ist die Nasenspitze, hier die ringabschnittsförmige Nasenbogenspitze vorzugsweise durch eine zylinderabschnittsförmige Ringabschnittsfläche abgestumpft. Der nach unten divergente spitze Winkel W1 der Kegelfläche 36 schließt mit der Vertikalen ca. 33° ein. Der Schaft 11 des Werkzeugs 12 weist vorzugsweise am Umfangsrand seines freien Endes eine Anphasung entsprechenden Winkels oder eine Abrundung auf.

Der Kupplungsschieber 24 ist zwischen einer in Fig. 2 dargestellten Kupplungsstellung, in der seine Einwärtsbewegung durch einen Anschlag A begrenzt ist und in der die Kupplungsnase 25 in das hohlzylindrische Steckloch 4a der Antriebshülse 4 hineinragt und einer demgegenüber nach außen verschobenen Entkupplungsstellung oder Freigabestellung verschiebbar, in der die Kupplungsnase 25 nicht in das Steckloch 4a hineinragt. Dabei ist die Anordnung so getroffen, daß in der Kupplungsstellung der in das Steckloch 4a eingeschobene Schaft 11 auf die Kegelfläche 36 trifft und durch diesen Keiltrieb der Kupplungsschieber 24 in seine Freigabestellung verschoben wird. Zur selbsttätigen Rückführung des Kupplungsschiebers 24 in seine Kupplungsstellung ist eine ihn radial nach innen beaufschlagende Feder 37 vorgesehen, die bei der vorliegenden Ausgestaltung durch eine Ringfeder oder spangenförmige Feder 37 aus einem im Querschnitt z.B. runden Federdraht gebildet ist, die zu ihrer axialen Sicherung in einer Umfangsnut 38 in der Mantelfläche 38a sitzt. Vorzugsweise weist in derselben Querebene auch die Antriebshülse 4 eine solche Umfangsnut 38a auf, in der die ringförmige Feder 37 sitzt. Die Feder 37 wird beim Verschieben des Kupplungsschiebers 24 in seine Freigabestellung elastisch geöffnet, was ihre spangenförmige oder C-Form ermöglicht. Durch die federelastische Kontraktion der Feder 34 wird das Kupplungsstück 24 selbsttätig in seine Kupplungsstellung verschoben. In dieser Stellung übt die Feder 37 immer noch eine Vorspannung auf das Kupplungsstück 24 aus.

Um zu gewährleisten, daß in der Freigabestellung auch die Enden des Nasenbogens 35 das Steckloch 4a freigeben, ist - in der Draufsicht gesehen - die konkave Krümmung des Nasenbogens 35 größer als eine entsprechende zylinderabschnittförmige Krümmung oder mit eine entsprechende Vergrößerung bildenden Auslaufflanken ausgebildet, so daß auch die Nasenbogenenden in der Freigabestellung sich außerhalb des Stecklochs 4a befinden.

Bei der vorliegenden Ausgestaltung ist der Grund 31a des Führungsschlitzes 31 diametral oder demgegenüber etwas nach außen radial versetzt angeordnet. Die radiale Abmessung d des Kupplungsschiebers 24 ist entsprechend groß bemessen.

Der die Einschubbewegung des Kupplungsschiebers 24a begrenzende Anschlag A kann zwischen den radialen inneren Begrenzungsflächen 39 des Kupplungsschiebers 24 und dem Grund 31a des Führungsschlitzes 31 oder zwischen der Stufenfläche 34 und der Mantelfläche der Antriebshülse 4 gebildet sein. Bei der vorliegenden Ausgestaltung liegt die Mantelfläche 28a des Kupplungsschiebers 24 etwa in axialer Flucht mit der Mantelfläche der Antriebshülse 4 im vorhandenen Bereich, wobei für den Steg 33 eine seitliche oder konzentrische Ausnehmung 41, insbesondere eine koaxiale Verjüngung an der Antriebshülse 4 vorgesehen ist.

Bei der vorliegenden Ausgestaltung sind in der Mantelfläche 28a des Kupplungsschiebers 24 zwei Nutabschnitte 38b, 38c vorgesehen, die in der Seitenansicht gemäß Fig. 4 einen Abstand e voneinander aufweisen, wodurch ein Steg 40 gebildet ist. Einen entsprechenden Abstand e weisen unter Berücksichtigung eines Bewegungsspiels auch die Enden der ringförmigen Feder 37 auf, wobei sich die montierte Feder 37 mit ihren freien Enden zu beiden Seiten dieses Stegs befindet und dadurch gegen ein Verdrehen in Umfangsrichtung gesichert ist.

Zum Lösen der Kupplung 13 ist die Betätigungsvorrichtung 14 vorgesehen,die auf der dem Werkzeug 12 abgewandten Seite des Kopfgehäuses 2 angeordnet oder von dieser Seite zugänglich ist. Bei der vorliegenden Ausgestaltung weist die Betätigungsvorrichtung 14 ein Druckglied 46 auf, das in einer Führung 47 axial zwischen einer nach innen verschobenen Funktionsstellung und einer nach außen verschobenen Bereitschaftsstellung manuell verschiebbar ist.

Bei der vorliegenden Ausgestaltung ist das Druckglied 46 eine runde Kappe des Kopfgehäuses 2, die durch eine vorzugsweise runde Öffnung 48 des Kopfgehäuses 2 zugänglich ist oder die Öffnung nach außen durchsetzt und insbesondere das Kopfgehäuse 2 nach außen überragt und dabei die Öffnung 48 mit einem die Führung gewährleistenden Bewegungsspiel verschließt.

An seiner Innenseite weist das Druckglied 46 einen zylindrischen oder vorzugsweise hohlzylindrischen Betätigungsansatz 49 auf, der an seinem freien Außenrand eine Außenkegelfläche 51 mit einem dem Winkel W entsprechenden Winkel aufweist.

Das Druckglied 46 ist durch eine Feder 52 in seine Bereitschaftsstellung vorgespannt, in der seine nach außen gerichtete Bewegung durch einen Anschlag 53 begrenzt ist, der bei der vorliegenden Ausgestaltung durch eine innere Ringschulter 54 gebildet ist, an der eine äußere Ringschulter 55 am Druckglied 46 unter dem Druck der vorzugsweise als Druckfeder ausgebildeten Feder 52 anliegt. Das innere Ende der Druckfeder 52 stützt sich an einer Schulterfläche des Kopfgehäuses 2 ab. Bei der vorliegenden Ausgestaltung ist das Druckglied 46 in einem ringförmigen Einsatzstück, insbesondere Schraubteil 56, angeordnet, das mit einem Hülsenabschnitt 57 mit Außengewinde in ein entsprechendes Innengewinde des Kopfgehäuses 2 eingeschraubt ist. Vorzugsweise weist das Einsatzstück einen Flansch 58 auf; der an der Oberseite des Kopfgehäuses 2 anliegt.

Die koaxiale Führung 47 für das Druckglied 46 kann in mehrfacher Hinsicht verwirklicht sein. Zum einen kann die Führung 47 durch die Außenmantelfläche 47a des Druckglieds 46 und die Innenmantelfläche 47b des Gehäuses 2 oder hier des Schraubteils 56 gebildet sein. Zum anderen kann zusätzlich oder ggf. auch ausschließlich eine koaxiale Führung 47 zwischen der zylindrischen Innenmantelfläche 49a des Betätigungsansatzes 49 und der zylindrischen Außenmantelfläche 50a des zugewandten Endbereichs 50 der Antriebshülse 4 vorgesehen sein. In der Führung 47 findet keine Drehbewegung statt, da das Druckglied 46 zwar drehbar wäre, sich jedoch im normalen Funktionsbetrieb nicht dreht. Dagegen findet in der Führung 47 dann eine Führung statt, wenn das Druckglied 46 eingeschoben ist und die Antriebshülse 4 rotiert, z.B. ausläuft. Diese Führung 47 kann somit in der eingeschobenen Stellung des Druckglieds 46 eine geringe Bremskraft auf die auslaufende Antriebshülse 4 ausüben und zwar im Rahmen eines Führungswiderstandes, der sich als Bremskraft auf die Antriebshülse 4 auswirkt.

Das innere Widerlager für die Druckfeder 52 ist durch einen Federring 59 gebildet, der in eine entsprechende Innenringnut 61 des Hülsenabschnittes 57 in deren inneren Endbereich eingesetzt ist. Bei der vorliegenden Ausgestaltung bildet der Federring 59 in der eingesetzten Stellung des Einsatzteils bzw. Schraubteils 56 eine obere Begrenzung für den Außenring eines das zugehörige Drehlager 5 bildenden Wälzlagers 62. Das Einsatzstück, der Federring 59, die Druckfeder 52 und das Druckglied 46 bilden somit eine vormontierbare Baueinheit, die durch Einsetzen oder Einschrauben in einfacher Weise montierbar ist. Bei einem Schraubteil 56 sind im oberen Bereich nicht dargestellte Angriffselement, z.B. einander gegenüberliegende Stecklöcher für ein Schraubwerkzeug vorgesehen. Das Druckglied 46 kann bei demontiertem Federring 59 von unten in das Einsatz- oder Schraubteil 56 eingeschoben werden und dann wird der Federring 59 eingesetzt.

In der in Fig. 2 dargestellten Bereitschaftsstellung weist die Außenkegelfläche 51 einen Abstand von der mit ihr korrespondierenden Innenkegelfläche 33 auf, der vorzugsweise gering ist und z.B. etwa 1mm betragen kann. Zum Öffnen der Kupplung 13 wird das Druckglied 46 durch Fingerdruck der zugehörigen Bedienungshand eingeschoben, wobei die Kegelflächen 33, 51 aufeinander treffen und der Kupplungsschieber 24 radial nach außen in seine Freigabestellung verdrängt wird und der Schaft 11 aus dem Steckloch 4a herausgezogen werden kann. Das Kuppeln des Schaftes 11 erfolgt beim Einstecken in das Steckloch 4a selbsttätig durch ein Verdrängen des Kupplungsschiebers 24 entgegen der Federkraft und selbsttätiges Einrasten in die Ausnehmung 26 im Schaft 11, die segmentförmig, z.B. als sekantiale Nut, oder ringförmig ausgebildet sein kann.

Bei der Ausgestaltung gemäß den Fig. 2 bis 6 ist der Kupplungsschieber 24 ein Bauteil, das mit der Antriebshülse 4 rotiert. Wenn deshalb die Betätigungsvorrichtung 14 zum Entkuppeln der Kupplung 13 während der Rotation oder während des Auslaufs der Antriebshülse 4 betätigt wird, treten insbesondere zwischen den Kegelflächen 33, 51 aber auch in der Führung 30 des Kupplungsschiebers 24 und/oder in der Führung 47 des Druckgliedes 46 Reibungskräfte auf; die zu einem "Fressen" an den Kontakt- bzw. Führungsflächen führen können, wodurch die Funktionsteile beschädigt werden. Um dies zu vermeiden und auch deshalb, um dem Kupplungsschieber 24 und/oder Druckglied 46 sowie den damit so zusammenwirkenden Bauteilen eine längere Lebensdauer zu geben, ist der Kupplungsschieber 24 an wenigstens einer seiner Reibungsflächen, z.B. an seiner Kegelfläche 33 und/oder an seiner Unterfläche 28 und/oder an seiner Oberfläche 29 und/oder das Druckglied 46 an seiner Außenmantelfläche 47a und/oder an seiner Innenmantelfläche 49a und/oder an seiner Kegelfläche 51 mit einem Keramikmaterial beschichtet oder im Bereich der vorgenannten Flächen oder insgesamt aus Keramikmaterial hergestellt, vorzugsweise einstückig. Hierdurch wird die Gleitfähigkeit der Reibungsflächen verbessert, die Lebensdauer der miteinander in Reibeingriff bestehenden Bauteile verlängert und die Wärmeerzeugung verringert. Diese Vorteile sind unabhängig davon, ob die Reibungsflächen geschmiert werden oder nicht. Die Erfindung führt somit zu dem weiteren Vorteil, daß eine Schmierung und Pflege der Reibungsflächen vermindert werden kann oder nicht erforderlich ist.

Bei einer Herstellung des Kupplungsschiebers insgesamt aus keramischen Material kann er als Formteil oder als Spritzteil oder als Gießteil oder als Preßteil hergestellt werden. Dabei hat es sich gezeigt, daß es keiner Nachbearbeitung nach seiner Herstellung bedarf, sondern er kann bei den vorgenannten Herstellungsmaßnahmen direkt in seine Endform gefertigt werden, was eine wesentliche Vereinfachung der Herstellung führt und die Herstellungskosten senkt.

Als vorteilhaftes Keramikmaterial hat sich bei Versuchen ein polykristalines Keramikmaterial erwiesen, insbesondere mit einem hohen Reinheitsgrad von z.B. 99% und mehr.

Wenn der Kupplungsschieber 24 als Spritzteil gefertigt wird, ist es vorteilhaft, den in Fig. 4 durch eine Kreuzschraffur verdeutlichten Anspritzbereich B an der Mantelfläche 28 anzuordnen, insbesondere im Bereich des Stegs 32. In diesem Bereich ist eine durch das Anspritzen hervorgerufene Oberflächenungenauigkeit am wenigsten störend. Dabei kann die Mantelfläche im Bereich des Stegs 32 bezüglich der übrigen Mantelfläche 28 geringfügig radial einwärts versetzt sein, wie es Fig. 5 zeigt.

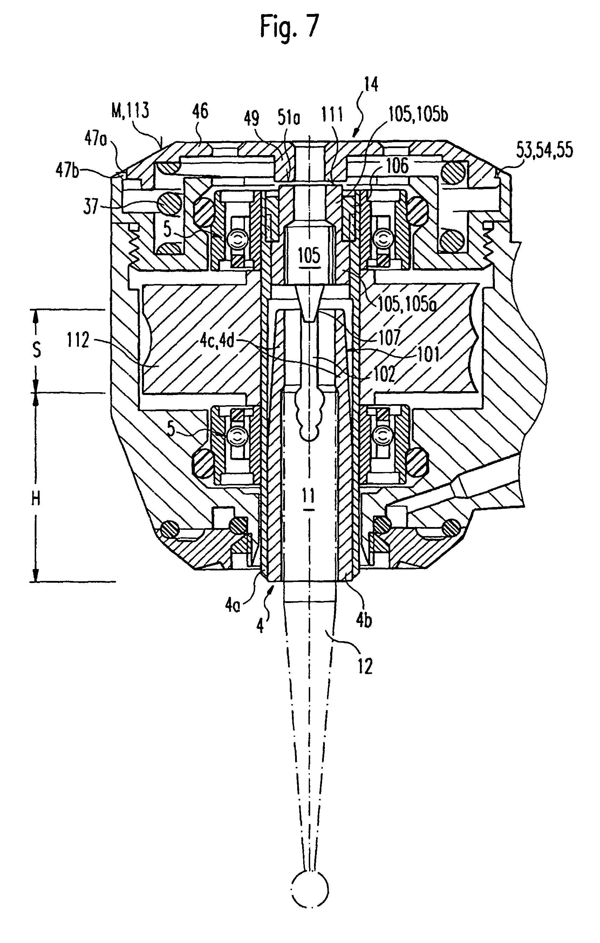

Bei der Ausgestaltung nach Fig. 7, bei der gleiche oder vergleichbare Teile ebenfalls mit gleichen Bezugszeichen versehen sind, ist eine kraftschlüssig wirksame Kupplung 101 im Sinne einer Klemmkupplung zwischen der Antriebshülse 4 und dem Schaft 12 des Werkzeugs vorgesehen. Diese Kupplung 101 ist zugleich in axialer Richtung als auch in Umfangsrichtung wirksam. Die Antriebshülse besteht aus einer äußeren Lagerhülse 4a und einer darin fest eingesetzten Spannhülse 4b, deren innerer bzw. dem Werkzeug 12 abgewandter Endbereich als Spannbereich außen verjüngt ist.

Diese Kupplung 101 ist bekannt. Sie wird durch zwei einander diametral gegenüberliegende Spannhülsensegmente 4c, 4d gebildet, die durch einen axialen Schlitz 102 voneinander getrennt sind, der an dem Werkzeug 12 abgewandten Ende des Schaftes 11 ausläuft und sich zum Werkzeugkopf hin im mit S bezeichneten Spannbereich und auch noch in den mit H bezeichneten Haltebereich der Antriebshülse 4 erstreckt und darin endet. Im Spannbereich S ist die Innenquerschnittsabmessung der im wesentlichen hohlzylindrischen Spannhülse 4b etwas geringer bemessen, als im Haltebereich H. Beim weiteren Einschieben des Schaftes 11 aus der in Fig. 7 dargestellten Zwischenstellung werden folglich die durch den Schlitz 102 voneinander getrennten Spannsegmente 4c, 4d gespreizt, wobei sie elastisch ausbiegen und mit einer Vorspannung am Schaft 11 anliegen, die das Spannen gewährleistet. Das Kuppeln des Schaftes 11 erfolgt somit selbsttätig beim Einschieben desselben in die Spannhülse 4b.

Zum Entkuppeln ist ein Druckschieber 105 oberhalb der Spannhülse 4b in der Lagerhülse 4a axial verschiebbar gelagert, der an seiner der Spannhülse 4b zugewandten Stirnseite zwei Druckkeile 107 einander diametral gegenüberliegend aufweist, die in den Schlitz 102 einfassen, wie es Fig. 7 zeigt. Der Druckschieber 105 weist einen unteren vergrößerten Längsabschnitt 105a auf, der mit Bewegungsspiel in der Lagerhülse 4a gelagert ist und einen oberen Längsabschnitt 105b aufweist, der im Durchmesser verjüngt ist. In diesem Ringhohlraum ist dem axial beweglichen Druckschieber 105 ein seine Bewegung von der Antriebshülse 4 hinweg begrenzendes Anschlagglied 106 zur Einstellung einer Vor-Einstellung der Spannsegmente 4c, 4d zugeordnet. Das Anschlagglied ist durch einen in das obere Ende der Lagerhülse 4a eingeschraubten Einstellring gebildet.

Oberhalb des Druckschiebers 105 ist ein Druckglied 46 in einer Führung 47 koaxial verschiebbar am oberen Ende des Gehäuses 2 gelagert, das zwischen seiner in Fig. 7 dargestellten Bereitschaftsstellung und einer nach innen verschobenen Betätigungsstellung manuell einschiebbar und durch die Druckfeder 37 wieder in seine Bereitschaftsstellung rückstellbar ist. Die Anordnung und Funktion dieses Druckgliedes 46 entspricht im wesentlichen der Ausgestaltung nach Fig. 2, jedoch drückt der Betätigungsansatz 49 mit einer radialen Stirnfläche 51a gegen die obere radiale Stirnfläche 111 des Druckschiebers 105, wenn das den Gehäusedeckel bildende Druckglied 46 eingeschoben wird. Letzteres führt zu einer Öffnung der Kupplung 101, indem die Druckkeile 107 die Spannsegmente 4c, 4d spreizen und dadurch der Schaft 11 frei wird.

Wie bereits beim Ausführungsbeispiel nach Fig. 2 ist auch das Druckglied 46 im Bereich seiner Führungsflächen 47a und/oder im Bereich seiner Druckfläche 51 a mit einem keramischen Material beschichtet. Es kann auch in diesen Bereichen aus keramischem Material bestehen oder vorzugsweise insgesamt aus keramischem Material bestehen. Hierdurch werden auch bei diesem Ausführungsbeispiel die bereits beschriebenen Vorteile erreicht.

Im übrigen unterscheidet sich die Ausgestaltung nach Fig. 7 dadurch, daß die Antriebshülse 4 mit dem zugehörigen Lager 5 im Schraubteil 56 gelagert ist und ein an sich bekannter Turbinenantrieb mit einem auf der Antriebshülse 4 angeordneten Turbinenrad 112 vorgesehen ist.

Wie bereits bei den Kupplungsschiebern 24 läßt sich auch das Druckglied 46 einfach und kostengünstig als Formteil oder als Spritzteil oder als Gießteil oder als Preßteil herstellen. Dabei bedarf es keiner Nachbearbeitung nach seiner Herstellung, und es kann mit den vorgenannten Herstellungsmaßnahmen direkt in seine Endform gefertigt werden.

In der zahnärztlichen Praxis ist es üblich geworden, Handstücke, die sich hinsichtlich ihres Übersetzungsverhältnisses oder anderer Eigenschaften, z.B. Ausführung mit Beleuchtung, unterscheiden, mit unterschiedlichen Farben zu kennzeichnen. Für eine Übersetzung wird eine rote Kennzeichnung M, für eine Untersetzung eine grüne Kennzeichnung M, für eine Übersetzung 1:1 eine blaue Kennzeichnung M und für eine Beleuchtung eine gelbe Kennzeichnung M angebracht. Bei der vorliegenden Ausgestaltung ist diese Farbkennzeichnung an der sichtbaren Oberfläche des Druckglieds 46 angebracht, wobei die Farbkennzeichnung auf der gesamten Oberfläche oder nur an einer Stelle der Oberfläche angeordnet sein kann. Es ist auch vorteilhaft, das gesamte Druckglied 46 mit der gewünschten Farbe zu versehen. Dies kann aus herstellungstechnischen Gründen von Vorteil sein. Bei der vorliegenden Ausgestaltung läßt sich die gewünschte Farbe in einfacher und kostengünstiger Weise in das keramische Material einmischen und zwar sowohl dann, wenn die Farbe in das gesamte Material des Druckglieds 46 eingemischt wird als auch dann, wenn nur eine kleine Stelle 113, z.B. eine kleine Kreisfläche, mit der Farbe eingefärbt wird. Unter Bezug auf die vorbeschriebenen Ausführungen können die Farben Rot, Blau, Grün oder Gelb verwendet werden.

Die Einfärbung des Materials führt zu dem Vorteil, daß die Farbe nicht in einer Schicht vorhanden ist, die abplatzen oder abnutzen kann, sondern aufgrund der Einfärbung durchgefärbt ist und unempfindlich gegen Beschädigung oder Abnutzung ist.

## Patentansprüche

1. Winkelförmiges oder gerades Handstück (1) für medizinische oder dentalmedizinische Zwecke und dazugehöriges, einen Werkzeugschaft (11) aufweisendes Werkzeug (12),
- mit einem Gehäuse (2),
- mit einer in dem Gehäuse (2) drehbar gelagerten und durch einen Antrieb drehbaren Antriebshülse (4) zur Aufnahme des Werkzeugschaftes (11),
- mit einer lösbaren Kupplung (9) zur Drehmitnahmeverbindung des Werkzeugschaftes (11) mit der Antriebshülse (4),
- mit einem Kupplungsschieber (24), der in einer Führung (30) quer zur Drehachse (6) des Werkzeugschaftes (11) zwischen einer Kupplungsstellung und einer Entkupplungsstellung verschiebbar ist und in seiner Kupplungsstellung in eine an dem Werkzeugschaft (11) vorgesehene Kupplungsausnehmung (26) eingreift und den Werkzeugschaft (11) dann in axialer Richtung mit der Antriebshülse (4) verbindet,
- mit einem Druckglied (46), das in dem dem Werkzeug (12) abgewandten Bereich des Gehäuses (2) an dessen Außenseite angeordnet ist und in einer axialen Führung (47) zwischen einer äußeren Freigabestellung und einer inneren Betätigungsstellung verschiebbar ist, und
- mit einer ersten Feder (52), die das Druckglied (46) in seine Freigabestellung beaufschlagt,
- wobei das Druckglied (46) und der Kupplungsschieber (24) korrespondierende Kontaktflächen (36, 51) aufweisen, die gewährleisten, daß der Kupplungsschieber (24) in seine Entkupplungsstellung gedrängt wird, wenn das Druckglied (46) in seine Betätigungsstellung bewegt wird,
**dadurch gekennzeichnet,**
- es eine zweite Feder (37) gibt, welche den Kupplungsschieber (24) in die Kupplungsstellung beaufschlagt, und
daß der Kupplungsschieber (24) aus keramischem Material besteht.

2. Handstück nach Anspruch 1,
**dadurch gekennzeichnet,**
**daß** der Kupplungsschieber (24) und/oder das Druckglied (46) jeweils ein Formteil oder ein Spritzteil oder ein Gießteil oder ein Preßteil ist bzw. sind.

3. Handstück nach Anspruch 1 oder 2,
**dadurch gekennzeichnet,**
**daß** der Kupplungsschieber (24) bezüglich der Drehachse (6) der Antriebshülse (4) einseitig angeordnet ist.

4. Handstück nach einem der vorherigen Ansprüche,
**dadurch gekennzeichnet,**
**daß** der Kupplungsschieber (24), längs der Drehachse (6) gesehen, eine halbringförmige Form aufweist.

5. Handstück nach einem der vorherigen Ansprüche,
**dadurch gekennzeichnet,**
**daß** der Kupplungsschieber (24) eine radial nach innen gerichtete Kupplungsnase (25) mit einem gerundeten oder schrägen Nasenrücken aufweist und die Kupplungsbewegung des Kupplungsschiebers (24) durch einen Anschlag (A) in einer solchen Stellung des Kupplungsschiebers (24) begrenzt ist, daß der Schaft (11) des Werkzeugs (12) beim Einstecken in die Antriebshülse (4) gegen den Kupplungsnasenrücken stößt und den Kupplungsschieber (24) in seine Entkupplungsstellung verdrängt.

6. Handstück nach einem der vorherigen Ansprüche,
**dadurch gekennzeichnet,**
**daß** das Druckglied (46) aus keramischem Material besteht.

## Claims

1. Angled or straight handpiece (1) for medical or dental-medical purposes and a tool (12) belonging thereto having a tool shaft (11),
- having a housing (2),
- having a drive sleeve (4), mounted rotatably in the housing (2) and rotatable by means of a drive, for receiving the tool shaft (11),
- having a releasable coupling (9) for connecting the tool shaft (11) with the drive sleeve (4) such that the shaft rotates with the sleeve,
- having a coupling slider (24) which is displaceable, in a guide (30) transverse to the axis of rotation (6) of the tool shaft (11), between a coupling position and a de-coupling position, and in its coupling position engages into a coupling recess (26) provided on the tool shaft (11) and then connects the tool shaft (11) with the drive sleeve (4) in axial direction,
- having a pressure member (46) which is arranged in the region of the housing (2) away from the tool (12), on the outside of the housing, and is displaceable in an axial guide (47) between an outer release position and an inner actuation position,
- having a first spring (52) which urges the pressure member (46) into its release position,
- whereby the pressure member (46) and the coupling slider (24) have corresponding contact surfaces (36, 51) which ensure that the coupling slider (24) is urged into its de-coupling position when the pressure member (46) is moved into its actuating position,
**characterised in that**,
there is a second spring (37) which urges the coupling slider (24) into the coupling position, and the coupling slider (24) is of ceramic material.

2. Handpiece according to claim 1,
**characterized in that**,
the coupling slider (24) and/or the pressure member (46) is or are, in each case, a molded part, or an injected part, or a cast part, or a stamped part.

3. Handpiece according to claim 1 or 2,
**characterized in that**,
the coupling slider (24) is, with regard to the axis of rotation (6) of the drive sleeve (4), arranged on one side.

4. Handpiece according to any preceding claim,
**characterized in that**,
the coupling slider (24) has - viewed along the axis of rotation (6) - a half-ring-shape form.

5. Handpiece according to any preceding claim,
**characterized in that**,
the coupling slider (24) has a radially inwardly directed coupling nose (25) having a rounded or inclined nose bridge (36) and the coupling movement of the coupling slider (24) is restricted by a stop (A) in such a position of the coupling slider (24) that upon insertion into the drive sleeve (4) the shaft (11) of the tool (12) impacts against the coupling nose bridge and urges the coupling slider (24) into its de-coupling position.

6. Handpiece according to any preceding claim,
**characterized in that**,
the pressure member (46) is of ceramic material.

## Revendications

1. Pièce à main (1) angulaire ou droite pour des fins médicales ou dentaires et son outil (12) présentant une tige d'outil (11),
- munie d'un boîtier (2)
- munie d'un manchon d'entraînement (4) rotatif placé dans le boîtier (2), qui tourne par un entraînement pour recevoir la tige d'outil (11),
- munie d'un accouplement (9) amovible qui sert à relier l'entraînement rotatif de la tige d'outil (11) au manchon d'entraînement (4),
- munie d'un collier d'accouplement (24) qui sur un rail (30) perpendiculaire à l'axe de rotation (6) de la tige d'outil (11) est mobile entre une position d'accouplement et une position de désaccouplement et qui se met en prise, dans sa position d'accouplement, avec une encoche (26) prévue sur la tige d'outil (11) et qui relie ainsi la tige d'outil (11) au manchon d'entraînement (4) dans le sens axial,
- munie d'un élément comprimé (46) disposé dans la zone du boîtier (2) opposée à l'outil (12), sur sa face externe et qui suivant un guidage axial (47) est mobile entre une position de desserrage externe et une position de manoeuvre interne et
- munie d'un premier ressort (52) qui pousse l'élément comprimé (46) dans sa position de desserrage,
- dans laquelle l'élément comprimé (46) et le collier d'accouplement (24) présentent des surfaces de contact (36, 51) correspondantes qui garantissent le serrage du collier d'accouplement (24) dans sa position de désaccouplement lorsque l'élément comprimé (46) est déplacé dans sa position de manoeuvre,
**caractérisée en ce que**,
- un deuxième ressort (37) pousse le collier d'accouplement (37) dans la position d'accouplement, et
- le collier d'accouplement (24) est composé d'un matériau en céramique.

2. Pièce à main selon la revendication 1,
**caractérisée en ce que**,
le collier d'accouplement (24) et/ou l'élément comprimé (46) est / sont chacun une pièce moulée ou une pièce moulée par injection ou une pièce coulée ou une pièce moulée par compression.

3. Pièce à main selon la revendication 1 ou 2,
**caractérisée en ce que**,
le collier d'accouplement (24) est disposé d'un côté en fonction de l'axe rotatif (6) du manchon d'entraînement (4).

4. Pièce à main l'une quelconque des revendications précédentes,
**caractérisée en ce que**,
le collier d'accouplement (24), vu le long de l'axe rotatif (6), présente une forme en demi-cercle.

5. Pièce à main selon l'une quelconque des revendications précédentes,
**caractérisée en ce que**,
le collier d'accouplement (24) présente un tenon (25) orienté vers l'intérieur de manière radiale, avec un dos de tenon arrondi ou diagonal et le déplacement du collier d'accouplement (24) est limité par une butée (A) dans une position telle que la tige (11) de l'outil (12) vient heurter le dos du tenon d'accouplement lors de son introduction dans le manchon d'entraînement (4) et repousse le collier d'accouplement (24) dans sa position de désaccouplement.

6. Pièce à main selon l'une quelconque des revendications précédentes,
**caractérisée en ce que**,
l'élément comprimé (46) est composé d'un matériau en céramique.
